Europäisches Patentamt

European Patent Office

Office européen des brevets

(11) Publication number: **0 064 839**

**A1**

## (12) EUROPEAN PATENT APPLICATION

(21) Application number: **82302199.3**

(22) Date of filing: **28.04.82**

(51) Int. Cl.³: **B 62 L 5/10**
**F 16 D 51/60, F 16 D 51/46**

(30) Priority: **01.05.81 JP 67344/81**
**02.06.81 JP 85155/81**
**24.08.81 JP 125672/81 U**
**24.08.81 JP 125673/81 U**

(43) date of publication of application:
**17.11.82 Bulletin 82/46**

(84) Designated Contracting States:
**DE FR GB IT NL**

(71) Applicant: **SHIMANO INDUSTRIAL COMPANY LIMITED**
**77, 3-cho Oimatsu-cho Sakai-shi**
**Osaka(JP)**

(72) Inventor: **Nagano, Masashi**
**74-19, Midorigaoka**
**Izumi-shi Osaka(JP)**

(74) Representative: **Szczuka, Jan Tymoteusz et al,**
**Cruikshank & Fairweather 19 Royal Exchange Square**
**Glasgow G1 3AE Scotland(GB)**

(54) Cycle hub brake.

(57) The present invention relates to a cycle brake for mounting on a cycle wheel hub, said brake comprising a brake drum 1 securable to a said hub for rotation together therewith and having a braking surface, a brake pad 2 having a friction surface 21 opposite said braking surface of said brake drum 1, a support means 4, 9 for holding said brake pad 2 in closely spaced proximity to said braking surface and permitting relative rotation therebetween, and a control means (W.5) for bringing said friction surface 21 of said brake pad 2 into contact with said braking surface. Known such devices produce a limited braking force.

According to the present invention to one side of said brake pad 2 there is provided an opposed member 6 movable relative to said brake pad 2, and between said opposed member 6 and said brake pad 2 there is provided an actuator mechanism 7, 8, 31, 32, 51 which presses said friction surface 21 of said brake pad 2 against said braking surface of said brake drum 1 when said brake pad 2 moves circumferentially of said brake drum 1.

FIG. I

## CYCLE HUB BRAKE

This invention relates to cycle brakes and more particularly to hub-type brakes.

Conventionally, hub-type brakes on cycle wheels comprise a brake drum rotatable together with the hub and a brake pad having an arcuate friction surface housed in the drum and arranged so that pulling on a control wire causes the brake pad to swing relative to the brake drum bringing its friction surface into contact with a braking surface at the inner periphery of the brake drum thereby to exert a braking force.

This known type of brake construction is generally referred to as an internal expansion type brake, the brake pad normally being pivotally supported on a fixing member via a displacement member such as a cam. The brake shoe acts at a leading side during the braking action so as to be subjected to a self-braking effect the forces exerted on the brake shoe in its braking position tending to displace the brake shoe towards a position corresponding to an increased braking action. The self-braking effect obtained in this way from the swinging motion of the brake shoe alone is however limited and generally insufficient. It is therefore necessary in order to obtain sufficient braking to swing the brake shoe with a relatively large force. The maximum force that can be operated using a conventional hand-operated brake control system is however limited.

It is an object of the present invention to avoid or minimize one or more of the above disadvantages.

The present invention provides a cycle brake for mounting on a cycle wheel hub, said brake comprising a brake drum securable to a said hub for rotation together therewith and having a braking surface, a brake pad having a friction surface opposite said braking surface of said brake drum, a support means for holding said brake pad in closely spaced proximity to said braking surface of said brake drum and permitting relative rotation therebetween, a control means for bringing said friction surface of said brake pad into contact with said braking surface of said brake drum, characterised in that at one side of said brake pad there is provided an opposed member movable relative to said brake pad, and between said opposed member and said brake pad there is provided an actuator mechanism which presses said friction surface of said brake pad against said braking surface of said brake drum when said brake pad moves circumferentially of said brake drum.

Further preferred features and advantages of the invention will appear from the following detailed description given by way of example of some preferred embodiments illustrated with reference to the accompanying drawings in which:

Fig. 1 is a front elevation of a first embodiment of a brake of the invention;

Fig. 2 is a partial transverse cross-section of the brake of Fig. 1;

Fig. 3 is an axial cross-section taken on the line III - III in Fig. 1;

Fig. 4 is a view similar to that of Fig. 2 on a larger scale and illustrating operation of the brake;

Fig. 5 is a partial front elevation of a second embodiment;

Fig. 6 is an axial cross-section corresponding to Fig. 2 of the second embodiment;

Fig. 7 is a front elevation of a third embodiment;

Figs. 8 and 9 are partial transverse cross-sections of the third embodiment;

Fig. 10 is an axial cross-section taken on the line X-X in Fig. 7;

Fig. 11 is another axial cross-section taken on the line X-X in Fig. 7;

Fig. 12 is a perspective view of an inner member component of the third embodiment;

Figs. 13 and 14 are partial transverse cross-sections of a fourth embodiment;

Fig. 15 is a perspective view of a biasing member of the fourth embodiment and its mounting;

Fig. 16 is a perspective view of an alternative form of the biasing member of Fig. 15; and .

Fig. 17 is a schematic transverse cross-section of a fifth embodiment.

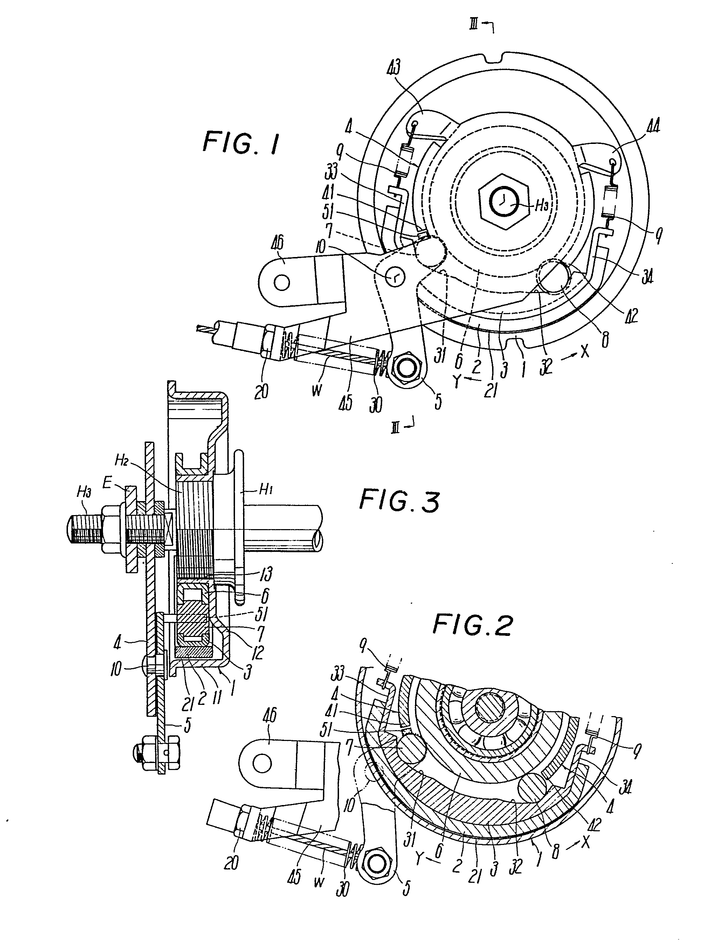

Figs. 1 to 4 show a rear brake mounted on the rear hub of a bicycle and comprising essentially a brake drum 1 screwthreadedly mounted on a hub shell $H_2$ axially outwards of a hub flange $H_1$ as shown in Fig. 3. The brake drum 1 has a radially inner peripheral surface constituting a braking surface. A brake pad 2 is housed within the drum 1 and mounted on a brake pad holder 3 and has an arcuate friction surface 21 extending opposite said brake drum inner peripheral braking surface. A fixed member 4 which is secured together with a hub shaft $H_3$ of the rear hub in a rear fork end $E$ of the bicycle frame and pivotably supports an operating arm 5 formed for retaining one end of a control wire $W$, so that in use pulling of the control wire $W$ causes the arm 5 to swing and move the brake pad holder 3 radially outwardly of the drum 1 thereby to press the brake pad 2 into contact with the inner peripheral braking surface of the brake drum 1 thereby exerting a braking action on the brake drum 1 as the latter rotates relative to the brake pad 2.

The brake drum 1 has a cylindrical portion 11 extending radially inwardly, a disc-like support 12 at one axial end of the cylindrical portion 11, and a centrally disposed cylindrical boss 13 in the support 12, the boss 13 being screw-threadedly engaged at its radially inner surface with the hub shell $H_2$ and supporting at its radially outer surface a bush 6 of an opposed member for rotation together therewith. Alternatively, the bush 6 may be formed integrally with said boss 13.

The brake pad 2 and brake pad holder 3 are both generally crescent-shaped, the brake pad 2 being mounted on the brake pad holder 3 on the outside of the latter. The brake pad holder 3 is however not essential.

A resilient support means, comprising the fixed member 4 and resiliently deformable members connected thereto, resiliently support the brake pad 2 in closely spaced proximity to the braking surface of the brake drum 1 permitting relative rotation between the brake pad and braking surface. The resiliently deformable members are in the form of coil springs 9 extending between respective spring holders 33 and 34 provided at opposite sides of the brake pad holder 3 and respective spring holders 43 and 44 provided on the fixed member 4.

Between the brake pad holder 3 and the bush 6 is provided a brake pad actuator mechanism for pressing the friction surface 21 of the brake pad 2 against the braking surface of the brake drum 1 in order to exert a braking action.

The actuator mechanism is an important function of this invention and has inclined surfaces which co-operate with engagement means. In the case of the present embodiment, the actuator mechanism comprises a pair of inclined surfaces 31 and 32 which are provided on the brake pad holder 3 spaced apart at a predetermined lengthwise interval and in opposed relation with respect to the radially outer periphery of the bush 6, and first and second rolling members 7 and 8, such as balls or rollers, as the engagement means, interposed between respective ones of the inclined cam surfaces 31 and 32 and the bush 6. The bush 6 and brake pad holder 3 are both of generally U-shaped section as shown in Fig. 3, the rolling members 7 and 8 being in the form of radially stepped rollers with smaller diameter portions at both axial ends and a larger diameter central portion, where non-stepped rollers may be used.

The fixed member 4 is disposed axially outwardly of the drum 1, is generally disc-shaped, and has at its centre a through bore through which extends the hub shaft $\underline{H}_3$. At both circumferential sides of the fixed member 4 are provided first and second retaining portions 41 and 42 for retaining respective ones of the rolling members 7 and 8 at the respective inclined surfaces 31 and 32, as well as respective ones of the spring holders 43 and 44. An arm 45 projects radially outwardly from between the retaining portions 41 and 42 and pivotally supports the operating arm 5 via a pivot 10, a holder 20 for an outer sheath $\underline{O}$ for the control wire $\underline{W}$ being provided at the distal end of said arm 45.

The operating arm 5 comprises a bell crank lever which is pivotally connected at its intermediate cranked portion to the arm 45 as described above and holds at one end the control wire W and at its other end a control rod 51 which extends into the brake drum 1 and is disposed between the rolling member 7 and the first retaining portion 41 and opposite thereto. The control rod 51 follows the pivotal movement of the operating arm 5 and displaces the first rolling member 7 along the first inclined surface 31, so that the second rolling member 8 is actuated through the first rolling member 7 and holder 3.

Also shown in the drawings, are a return spring 30 for the control arm 5, and a nose 46 provided at the distal end of the arm 45 of the fixed member 4 and mounted on the bicycle frame via a mounting means, such as a bolt or a band.

When the above-described brake is operated to exert the braking action on the bicycle during forward travel, that is, with normal rotation of the drum 1 in the direction of the arrow X in Figs. 1 and 2, a control lever (not shown) operated to pull the control wire W swings the operating arm 5 around the pivot 10, the control rod 51 moves the first rolling member 7 along the first inclined surface 31 in the direction of the arrow X, the brake shoe 2 and brake pad holder 3 swing around the first rolling body 7, and the brake pad 2 contacts the braking surface at the inner periphery of drum 1 with its friction surface 21. The brake drum 1 is thus subjected to a braking action so that a torque force exerted by the drum 1 is applied to the brake pad 2, thereby inducing a self-braking action therein whereby the brake pad 2 and brake pad holder 3 move to follow the rotation of drum 1 in the direction of arrow X so that the second rolling member 8 abuts against the second retaining portion 42 of the fixed member 4 where it is retained against rolling further. As a result, the brake pad holder 3 is biased at its leading side relative to the direction of rotation towards the braking surface of the brake drum 1 through the co-operation of the second rolling member 8 and second inclined surface 32. This in turn results in the brake pad 2 being strongly pressed against the braking surface of the brake drum 1. This strong braking pressure and the self-braking action can produce an extremely large braking force even with the use of only a relatively small applied force.

In the case where braking is exerted on the bicycle when moving backwards or in order to prevent backward movement on an uphill slope, pulling of the control wire W swings the operating arm 5, and the control rod 51 rolls the first rolling member 7 along the first inclined surface 31 in the direction of the arrow X just as in the case of braking during forward movement of the bicycle and the brake pad 2 is pressed against the braking surface of the brake drum 1.

Simultaneously with the contact of brake pad 2, the brake pad holder 3 and brake pad 2 tend to move together with the brake drum 1 in the direction of the arrow Y in Fig. 2, so that the first rolling member 7 is forced into abutment against the first retaining portion 41 by the operating rod 51 and is retained against rolling further, whereby the brake pad holder 3, and in turn the brake pad 2, are strongly pressed against the braking surface of the brake drum 1 through the first rolling member 7 and first inclined surface 31.

The above-mentioned first rolling member 7 and first inclined surface 31 are not however essential. In other words, the control arm 5 can swing to shift the brake pad holder 3 directly towards the braking surface of the brake drum 1 and actuate the second rolling member 8 through the brake pad holder 3.

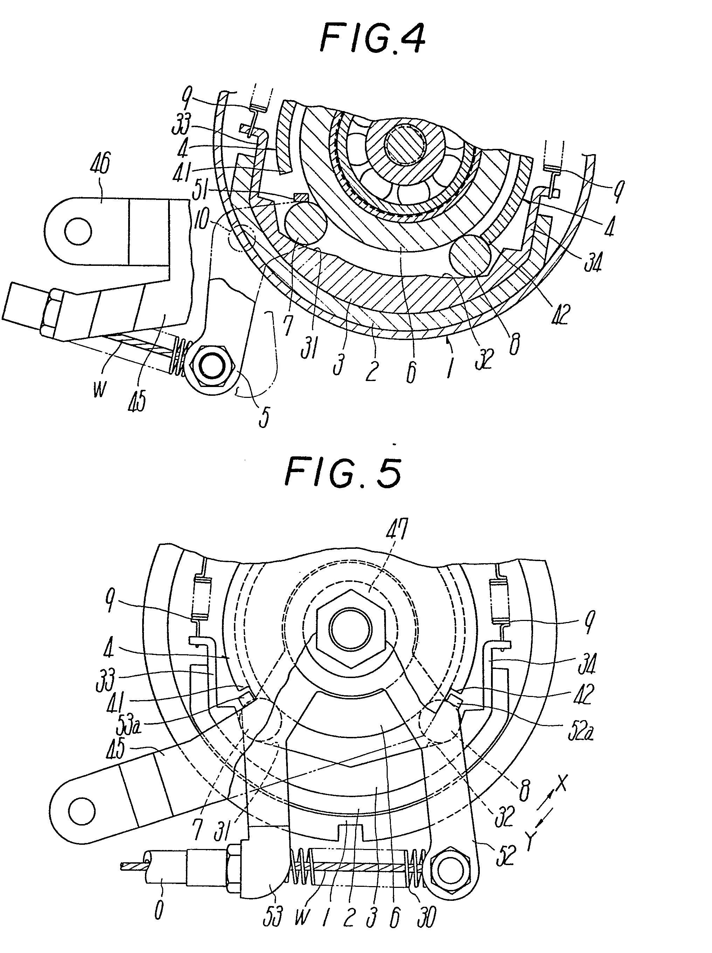

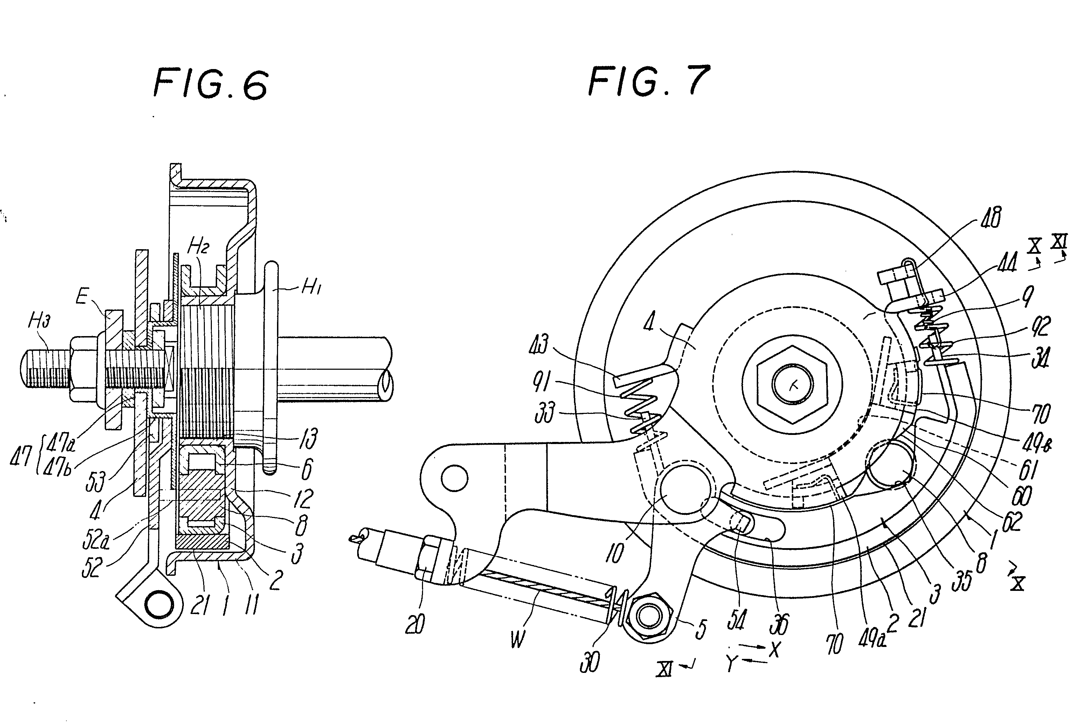

In the above described modified form of brake, during forward movement of the bicycle, both rolling members 7 and 8 are actuated to press the whole friction surface of the brake pad 2 against the braking surface of the brake drum 1. On the other hand, the second rolling member 8 is idle in braking of the bicycle during backward movement though in practice a smaller braking effect is required anyway during backward movement. If, however, it is desired to use both the first and second rolling members 7 and 8 to obtain maximum braking pressure for both forward and backward movement of the bicycle, a brake construction as shown in Figs. 5 and 6 may be used.

A modified embodiment of the brake of the invention shown in Figs. 5 and 6 has a fixed stepped cylindrical member.

47 comprising a smaller diameter portion 47a and a larger diameter portion 47b in continuation thereof, the smaller diameter portion 47a being fixed together with the fixed member 4 and hub shaft $H_3$ in the fork end $E$, the larger diameter portion 47b pivotably supporting first and second control arms 52 and 53. The distal ends of the arms 52 and 53 are disposed opposite each other, spaced apart at a predetermined separation, and hold respective ones of the control wire $W$ and outer sheath $O$ thereof. Control rods 52a and 53a are provided at lengthwise intermediate portions of the arms 52 and 53 and opposite respective ones of the first and second retaining portions 41 and 42 of the fixed member 4, one said control rod 52a being disposed between the second retaining portion 42 and the second rolling member 8 and the other rod 53a between the first retaining portion 41 and the first rolling member 7 so that the first arm 52 actuates the second rolling member 8 and the second arm 53 the first rolling member 7. Alternatively, the fixed cylindrical member 47 may be formed integrally with the fixed member 4 or omitted altogether. If it is omitted, the arms 52 and 53 may be supported directly to the fixed member 4 via respective pivot pins.

In the above described brake construction the control wire $W$ is pulled to simultaneously swing the arms 52 and 53 around the larger diameter portion 47b of cylindrical member 47 so that the control rods 52a and 53a move towards each other to roll the rolling members 7 and 8 towards each other along the respective inclined surfaces 31 and 32 displacing the whole of the brake pad holder 3 towards the braking surface inside the brake drum 1, whereby the brake pad 2 is pressed against said braking surface along the whole of the length of its friction surface. A torque force is then exerted by the brake drum 1 in the normal rotation direction indicated by the arrow $X$ in Fig. 5 on the brake pad 2 so that the brake pad 2 and holder 3 therefor move in said direction and the second rolling member 8 abuts against the second retaining portion 42 through the respective control rod 52a, thereby being restrained against further rolling. Simultaneously, the brake pad 2 is subjected to the torque force exerted by the drum 1 and pressed strongly against the braking surface through the second rolling member 8 and second inclined surface 32. The braking action during backwards movement of the bicycle involves the brake pad 2 contacting the braking surface of the brake drum 1 along the whole of its length while the torque force exerted by the brake drum 1 in the reverse direction of rotation as indicated by the arrow Y in Fig. 5, acts on the brake pad 2 so that the first rolling member 7 abuts against the first retaining portion 41 to be restrained against further rolling and the torque force exerted by the brake drum 1 causes the brake pad 2 to be strongly pressed against the braking surface on the inside of the brake drum 1 through the first rolling member 7 and first inclined surface 31. Thus in the case of both forward and backward movement of the bicycle, the self-braking action of the brake pad 2 and the forcible pressing through the rolling members 7 and 8 and respective inclined surfaces 31 and 32, together produce a very large braking force.

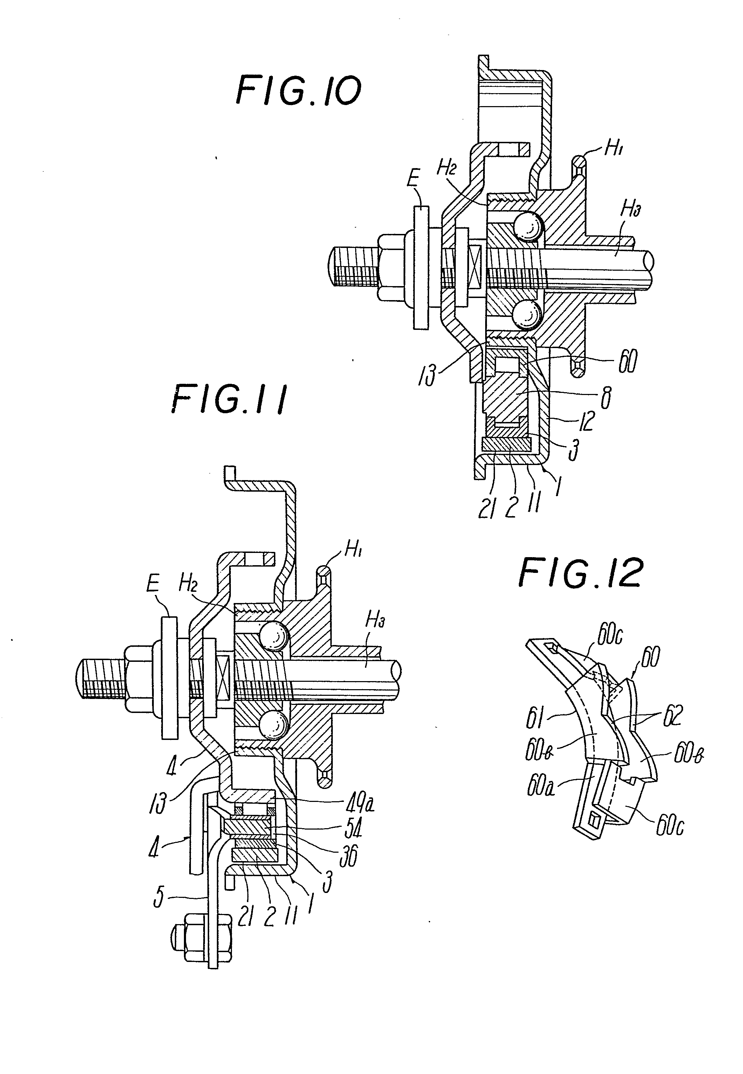

A third embodiment of the invention will now be described with reference to Figs. 7 to 12. This embodiment is basically the same as the previous embodiments, but differs therefrom in the provision of an inner member 60 on the fixed member 4. For convenience like parts and components in Figs. 7 to 12 corresponding to those in the previous embodiments are indicated by like reference numbers.

A modified brake pad holder 3 is also used in this embodiment and has a generally V-shaped cut-out providing an inclined surface 35 on the radially inward side of the brake pad holder 3, a single rolling member 8 of a roller being interposed between the inclined surface 35 and the inner member 60.

Between one spring holder 34 on the brake pad holder 3 and a further associated spring holder 48 provided on the fixed member 4 outwardly beyond the normal spring holder 44 thereon, extends a spring 9 for supporting the brake pad 2 and biasing it away from the braking surface inside the brake drum 1. Between the spring holders 43 and 44 on the fixed member 4 and the respective ends of the brake pad holder 3 are interposed respective anti-lock springs 91 and 92 which are not actuated until the brake pad holder 3 operates.

Also, the brake pad holder 3 is arranged to move together with the control arm 5 by means of a link member 54 projecting therefrom and engaging in an elongate slot provided in the brake pad holder 3 and extending longitudinally thereof.

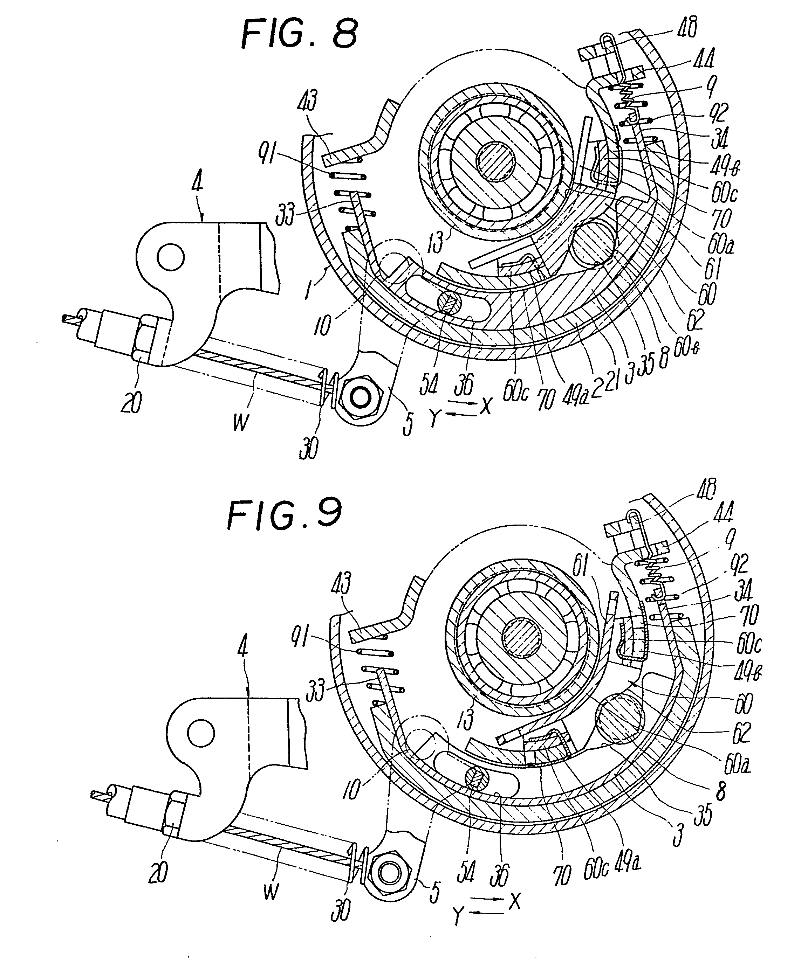

The inner member 60, as shown in Figs. 8, 9 and 12, comprises a base 60a in the form of an elongate plate cranked into a part-cylindrical form at a central portion and having a concave inner surface 61, a pair of upstanding plates 60b projecting at either side of the base 60a in mutually opposed relation and having at their upper edges generally V-shaped relatively wide open notches providing respective inclined surfaces 62. A pair of mounting plates 60c is supported at opposite ends of the upstanding plates 60b above and generally alongside the base 60a, being connected to the latter by respective portions alongside each end of one of said upstanding plates 60b and coplanar therewith, said mounting plates 60c being formed so as to be substantially concentric with the central part-cylindrical portion of the base 60a of said inner member 60.

As shown in Fig. 9 the inner member 60 is disposed with the upstanding plates projecting inbetween a pair of part-cylindrical supports 49a and 49b provided on the fixed member 4 and concentric with the brake drum 1 for supporting on their radially inward side the mounting plates 60c adjacent thereto. Two generally U-shaped retaining springs 70 are disposed with their central portions extending through respective bores formed in the mounting plates 60c and supports 49a and 49b, the radially outwardly disposed limbs having kinks which locate in recesses formed at the supports 49a and 49b, the other limbs gripping resiliently the radially inwardly disposed sides of the part-cylindrical portions of the mounting plates 60c so that the mounting plates 60c are firmly held on the supports 49a and 49b with the radially inwardly disposed side 61 of the inner member 60 spaced from the outer periphery of the boss 13 at a predetermined separation.

In use of the above described form of construction a control lever (not shown) is operated to pull the control wire W to exert a braking action on the bicycle during forward travel i.e. with normal rotation of the brake drum 1 in the direction of the arrow X as shown in Figs. 7 to 9, so that the control arm 5 swings around the pivot 10 and the link member 54 displaces the brake pad 2 and holder 3 pivotably around the rolling member 8, thereby pressing the friction surface 21 of the brake pad 2 against the braking surface on the inside of the brake drum 1. As a result a torque force exerted by the drum 1 acts on the brake pad 2 to induce a self-braking effect, whereby the brake pad 2 and holder 3 move in the direction of rotation of the drum 1 to roll the rolling member 8 along the inclined surfaces 35 and 62 in said direction. As a result, the brake pad 2 is strongly pressed against the braking surface on the inside of the brake drum 1 with the aid of the rolling member 8 and inclined surfaces 35 and 62, so that a greater braking pressure and self-braking effect, i.e. the leading effect, are obtained whereby a full braking effort can be exerted with only a relatively small applied force. The inner member 60 also strongly presses against the outer periphery of the boss 13 of the brake drum 1 through the displacement of the rolling member 8 between the inclined surfaces 35 and 62 of both the brake pad holder 3 on one side and the inner member 60 on the other forcing them away from each other thereby obtaining a still further increase in braking effect.

The braking action exerted on the bicycle during backward running or in order to prevent backwards movement during uphill travel is the same as during forward travel of the bicycle.

When the brake pad 2 and brake pad holder 3 in contact with the braking surface inside the brake drum 1 move in the rotation direction thereof, an anti-lock spring 91 or 92 is compressed, and when the control wire W is slackened for release of the braking action, moves surely in the reverse direction to an expanded condition, the spring 9 supporting the brake pad holder 3 acting to move said holder 3 and the brake pad 2 away from the braking surface inside the brake drum 1.

The inner member 60 mounted on the fixed member 4 as described above is movable slightly relative thereto, but could instead be fixed to or formed integrally with the fixed member 4. It is however advantageous for the purposes of obtaining a maximum braking effort to support the inner member 60 movably as shown in the drawings because of the enhanced braking effect obtained from the pressing of the inner member 60 against the outer periphery of the boss 13.

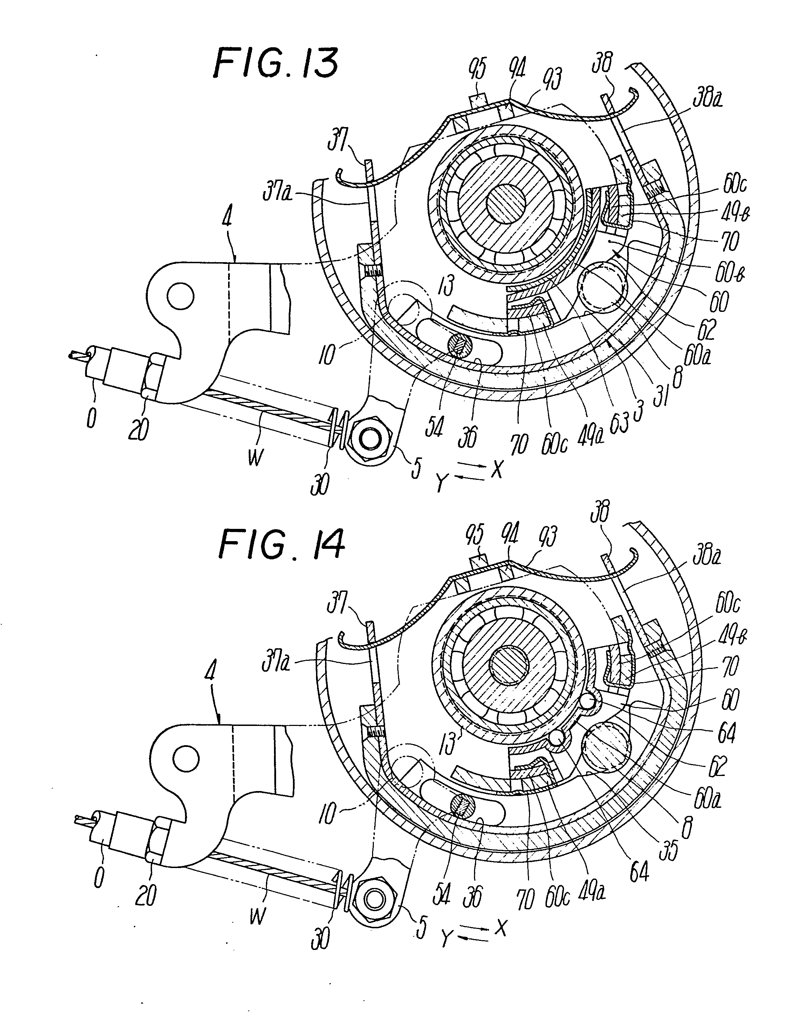

In the embodiment of Figs. 7 to 12, the boss 13 contacting with the inner member 60 as abovementioned can support the reaction force acting thereon during braking, thereby permitting a simplified form of construction of the inner member 60 and increasing the braking effect. However, it is not essential for the full braking action to press the inner member 60 against the boss 13, directly in that a slide member, as shown in Figs. 13 and 14, may be provided between the radially inward surface of the inner member 60 and the outer periphery of the boss 13. The slide member shown in Fig. 13 is a plate 63 of a synthetic resin material stuck to the radially inward surface 61 of the inner member 60 or fixed thereto with the aid of fixing means such as setscrews. As a still further alternative there could be used rolling members 64, such as balls or rollers, instead of the plate 63 between the inner member 60 and boss 13. The use of rolling member 64 can avoid heating of the inner member 60 caused by frictional contact between the latter and the boss during braking.

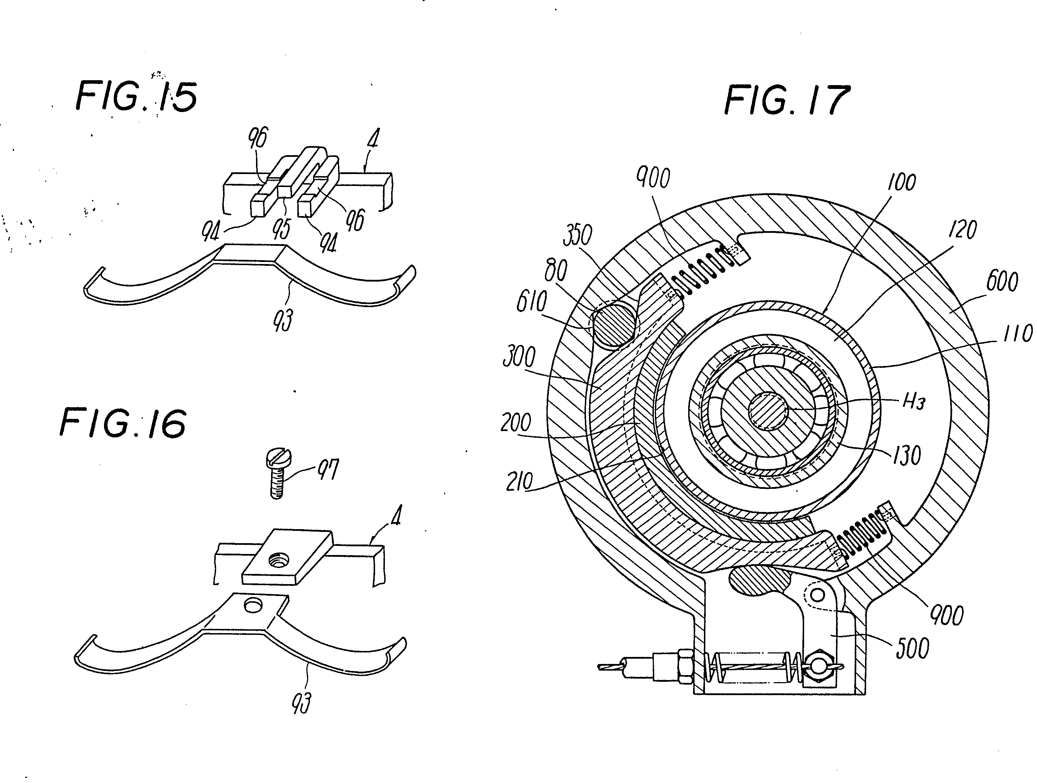

Alternatively also, the holding means for suspending the brake pad 2 and holder 3 in the above described embodiments could be replaced by a leaf spring 93 as shown in Figs. 13 and 14. Respective ends of the leaf spring 93 engage suitable engagement portions 37a and 38a in the support arms 37 and 38 provided at each end of the brake pad holder 3, and an intermediate portion is held between spring seats 94 and a spring pusher 95 provided on the fixed member 4 respectively. The spring pusher 95 or, as shown in Fig. 15, the spring seats 94 are provided with recesses 96 for receiving therein the spring 93 and supporting it against lateral displacement. As a further alternative the fixing means for the spring 93 could be in the form of a screw 97 extending through an aperture in the spring and screwthreadedly engaging a spring seat on the fixing member 4 to clamp the spring thereto as shown in Fig. 16.

Instead of rolling members there could be used engagement portions provided on one or other of the opposed parts thereat. The engagement means may conveniently comprise projections which are formed at one of the opposed surfaces of the brake pad 2 or holder 3 and of the opposed central or inner member 6 or 60 and engage the inclined surfaces 31 or 35 provided at the other, or may be provided at the opposed surfaces with the inclined surfaces engageable with each other.

In the embodiments shown in Figs. 7 to 14, the support means for the inner member 60 could instead use a resiliently deformable member, for example of rubber, so that the resiliently deformable or elastic member is pressed against the supports 49a and 49b of the fixed member 4 by holders provided on the inner member 60. Also, in the case of this embodiment, the control rod 51 or link member 54 may employ a rolling member, such as a roller.

Also in the case of the embodiments of Figs. 1 to 14 the brake pad 2 could be disposed outside of the brake drum 100 opposite a braking surface on the outside of said brake drum 100, as shown in Fig. 17. In more detail Fig. 17 shows a brake pad 200 provided radially outwards of a brake drum 100 and opposite the outer peripheral surface thereof. A brake pad holder 300 is provided radially outwards of the brake pad 200, and an outer member 600 is provided outwardly of the brake pad 200 and holder 300, the brake pad 200 and holder 300 being supported on the outer member 600 through a pair of coil springs 900 so as to permit relative rotation between the brake pad 200 and holder 300 and the brake drum 100 in slightly spaced apart disposition. A control arm 500 arranged for bringing the friction surface 210 of the brake pad 200 into engagement with a braking surface on the outside of the brake drum 100 is provided on the outer member 600, and between the outer member 600 and the brake pad

0064839

holder 300 is provided an actuator mechanism which presses the friction surface 210 of the brake pad 200 against the braking surface on the brake drum 100 during braking.

The actuator mechanism is essentially the same as in the embodiment of Figs. 7 to 12, comprising an inclined cam surface 350 on the brake pad holder 300 and one 610 on the outer member 600, a rolling body 80 being interposed between said inclined surfaces 350 and 610.

The outer member 600 is usually fixed to the hub shaft $H_3$ of the bicycle frame on which it is mounted, or may be secured to the fixed member 4 just as in the embodiment of Figs. 7 to 12. The outer member 600 in Fig. 17 is fixed to the hub shaft $H_3$ and formed integrally with the fixed member 4 in the embodiments of Figs. 1 to 14. Fig. 17 also shows a cylindrical portion 110 of the brake drum 100, a support 120, and a boss 130.

## CLAIMS

1. A cycle brake for mounting on a cycle wheel hub ($\underline{H}_2$), said brake comprising a brake drum (1) securable to a said hub ($\underline{H}_3$) for rotation together therewith and having a braking surface, a brake pad (2) having a friction surface (21) opposite said braking surface of said brake drum (1), a support means (4,9) for holding said brake pad (2) in closely spaced proximity to said braking surface of said brake drum (1) and permitting relative rotation therebetween, a control means for bringing said friction surface (21) of said brake pad (2) into contact with said braking surface of said brake drum (1),.
characterised in that
to one side of said brake pad (2) there is provided an opposed member (6) movable relative to said brake pad (2), and between said opposed member (6) and said brake pad (2) there is provided an actuator mechanism (7,8,31,32,51) which presses said friction surface (21) of said brake pad (2) against said braking surface of said brake drum (1) when said brake pad (2) moves circumferentially of said brake drum (1).

2. A cycle brake according to claim 1, wherein said brake pad (2) is provided with a brake pad holder (3), said holder (3) providing said support means (4,9), said actuator mechanism (7,8,31,32,51) being interposed between said brake pad holder (3) and said opposed member (6).

3. A cycle brake according to claim 1 or claim 2, wherein said support means (4,9) comprises a fixed member (4) and a resiliently deformable member (9) mounted thereon, said brake pad (2) being resiliently supported through said resiliently deformable member (9).

4. A cycle brake according to any one of claims 1 to 3, wherein said actuator mechanism comprises an inclined cam surface (31,32) and an engagement means (7,8) engageable therewith.

5. A cycle brake according to claim 4, wherein said engagement means is an inclined surface engageable with said inclined surface of said actuator mechanism.

6. A'cycle brake according to claim 4, wherein said engagement means comprises a rolling member (7,8).

7. A cycle brake according to any one of claims 1 to 6, wherein are provided said inclined surfaces on opposed portions of said brake pad and said opposed member (16).

8. A cycle brake according to any one of claims 1 to 7, wherein said opposed member comprises a bush (6) mounted so as to be rotatable together with said brake drum (1).

9. A cycle brake according to any one of claims 1 to 8, wherein said opposed member (6) is formed integrally with said fixed member (4).

10. A cycle brake according to any one of claims 1 to 9, wherein said brake pad (2) is disposed inside said brake drum (1) and the friction surface (21) of said brake pad (2) is disposed opposite a braking surface at a radially inner surface of said brake drum (1) and wherein said opposed member is in the form of an inner member (60) opposite the radially inner side of said brake pad (2).

11. A cycle brake for bicycles according to any one of claims 1 to 10, wherein said opposed member (60) has a part-cylindrical radially inward surface and said brake drum (1) has a central boss (13), having a radially outward periphery opposite said radially inward surface of said opposed inner member (60) so that during braking said boss (13) supports a reaction force acting on said opposed member (60).

12. A cycle brake according to claim 11, wherein a slide member (63) is provided at one of a radially inward surface of said opposed member (60) and the radially outward surface of said boss (13).

13.    A cycle brake according to any one of claims 1 to 8, wherein said brake pad (200) is disposed outside of said brake drum (100) and has its friction surface (210) opposite a braking surface on the radially outward side of said brake drum (100), said opposed member (600) being an outer member opposite the outside of said brake pad (200).

14.    A cycle brake according to any one of claims 1 to 8, wherein said opposed member (60) is formed separately from said fixed member (4) and resiliently connected (70) thereto.

0064839

1/7

FIG. 1

FIG. 3

FIG. 2

# FIG.4

# FIG.5

# FIG.6

$H_2$
$H_1$
E
$H_3$
$47 \begin{cases} 47a \\ 47b \end{cases}$
53
4
52a
52
21  1  11
13
6
12
8
3
2

# FIG.7

48
X  XI
44
9
92
34
43
91
33
70
49a
61
60
62
1
10
20
W
30
5
54  36
70  49a  2  21  3  35  8
Y  X
XI
X

3/7

0064839

FIG. 8

FIG. 9

FIG.10

FIG.11

FIG.12

FIG. 13

FIG. 14

FIG.15

FIG.16

FIG.17

0064839

**European Patent Office**

# EUROPEAN SEARCH REPORT

Application number

EP 82 30 2199

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | GB-A- 412 355 (FISKER) <br><br> *The whole document* | 1-4,6, 10,11 | B 62 L 5/10 <br> F 16 D 51/60 <br> F 16 D 51/46 |
| X | DE-A-2 817 359 (SHIMANO) <br><br> *Page 13, paragraph 4 to page 14, paragraph 4; figures 1-4* | 1,4,6, 8,10 | |
| X | NL-A- 54 057 (IMMINK) <br><br> *Page 1, line 67 to page 2, line 22; figures 1,2* | 1-4,6, 10 | |
| A | GB-A- 473 110 (MEHAFFY) <br><br> *Page 5, lines 56 to 64; figure 3* | 1-4,6, 7,10 | |
| A | US-A-1 575 426 (HARRY) <br><br> *The whole document* | 1-4,6, 10 | TECHNICAL FIELDS SEARCHED (Int. Cl. ³) <br><br> B 62 L <br> F 16 D |
| A | FR-A- 635 527 (VEROT) <br><br> *Page 2, lines 19 to 36; figures 1,2* | 1-5,7, 10 | |
| A | FR-A- 645 781 (RIEU) <br><br> *The whole document* | 1-4,6, 10 | |
| | -/- | | |

The present search report has been drawn up for all claims

| Place of search | Date of completion of the search | Examiner |
|---|---|---|
| THE HAGUE | 10-08-1982 | KIESLINGER J |

0064839

European Patent Office

**EUROPEAN SEARCH REPORT**

Application number

EP 82 30 2199

| DOCUMENTS CONSIDERED TO BE RELEVANT | | | Page 2 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| A | CH-A- 157 505 (KOBEL) <br><br> *The whole document* <br><br> --- | 1,4,5, 7,10 | |
| A | GB-A- 193 505 (YOXALL) <br> *Figures 1 to 4* <br><br> --- | 13 | |
| A | GB-A-1 580 404 (SHIMANO) <br> *Figures 1 to 8* <br><br> --- | 13 | |
| A | CH-A- 205 398 (KARRER) <br><br> --- | | |
| A | DE-C- 341 681 (FICHTEL & SACHS) <br><br> ----- | | |
| | | | TECHNICAL FIELDS SEARCHED (Int. Cl. ³) |

The present search report has been drawn up for all claims

| Place of search THE HAGUE | Date of completion of the search 10-08-1982 | Examiner KIESLINGER J |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82